**Europäisches Patentamt**

(19) **European Patent Office**

**Office européen des brevets**

(11) Numéro de publication: **0 006 773**

**B1**

(12) **FASCICULE DE BREVET EUROPEEN**

(45) Date de publication du fascicule du brevet: **29.12.82**

(51) Int. Cl.³: **G 01 P 3/62,** G 01 P 5/00, G 06 G 7/78, G 08 B 21/00

(21) Numéro de dépôt: **79400301.2**

(22) Date de dépôt: **14.05.79**

(54) Variomètre perfectionné.

(30) Priorité: **17.05.78 FR 7814560**

(43) Date de publication de la demande:
**09.01.80 Bulletin 80/1**

(45) Mention de la délivrance du brevet:
**29.12.82 Bulletin 82/52**

(84) Etats contractants désignés:
**BE CH DE GB IT**

(56) Documents cités:
**FR - A - 2 390 735**
**GB - A - 995 625**
**US - A - 3 296 422**

(73) Titulaire: **SOCIETE FRANCAISE D'EQUIPEMENTS POUR LA NAVIGATION AERIENNE (S.F.E.N.A.)**
**B.P. 59 Aérodrome de Villacoublay**
**F-78140 Velizy Villacoublay (FR)**

(72) Inventeur: **Sicre, Jean-Luc**
**8, rue de la Fosse Bazin**
**F-92260 Fontenay Aux Roses (FR)**

Courier Press, Leamington Spa, England.

# 0 006 773

## Variomètre perfectionné

La présente invention concerne un variomètre perfectionné pour aérodyne du type comprenant comme dans la demande de brevet FR n° 2 390 735 publiée après notre date de priorité, un cadran comportant une graduation représentative d'une vitesse verticale, une aiguille indiquant sur la graduation la vitesse verticale instantanée de l'aérodyne, un index représentatif de la vitesse verticale potentielle, mobile autour du cadran et dont la position par rapport à l'aiguille indique instantanément l'accélération sur la trajectoire de l'aérodyne.

On sait que les variomètres classiques pour aérodynes sont des instruments qui fournissent une information sur la vitesse verticale de l'aérodyne.

Ils utilisent donc un signal de vitesse verticale élaboré par un organe de calcul qui utilise des informations fournies par des détecteurs situés à bord de l'avion, par exemple une centrale anémométrique ou une centrale inertielle, et qui effectue également un filtrage pour éliminer ou atténuer tous les bruits parasites.

Ce problème de filtrage est particulièrement mis en relief par le brevet US 3 296 422 qui décrit un appareil permettant le calcul de la vitesse verticale vraie d'un aérodyne à partir des informations d'une centrale inertielle et dans lequel la composante d'erreurs due au bruit est atténuée par des filtres (retards) du premier et du second ordre.

Toutefois, un inconvénient de ces systèmes provient de ce filtrage, indispensable en raison du niveau de bruit important, mais qui introduit un retard important dans l'affichage de la vitesse verticale.

Il est clair qu'en raison de ce retard qui constitue, de toute façon, une gêne importante pour le pilote (correction par un calcul mental pour évaluer la vitesse instantanée), l'indication de l'accélération sur la trajectoire de l'aérodyne ne pourrait pas être obtenue si on utilisait, pour la commande de l'aiguille d'un variomètre perfectionné, du type de celui faisant l'objet de l'invention, le signal classique de vitesse verticale filtrée.

C'est la raison pour laquelle un des objets de l'invention et de la demande de brevet FR 2 390 735 consiste en l'élaboration d'une vitesse verticale instantanée obtenue en adjoignant à la vitesse compensée, une avance de phase qui est fonction d'un paramètre convenablement choisi de l'aérodyne.

Ainsi, dans le variomètre faisant l'objet de la demande de brevet français n° 2 390 735, le signal représentatif de la vitesse verticale instantanée est obtenu au moyen d'un organe de calcul réalisant l'équation:

$$h^{*o} = \frac{h^o A}{1+\tau_1 s} \times \frac{1+(\tau_1+\tau_2)s}{1+\tau_2 s} + \frac{\tau_1}{1+\tau_1 s} \times \frac{\tau_2 s}{1+\tau_2 s}(j_z - g),$$

équation dans laquelle

$h^{*o}$ est le signal de vitesse verticale instantanée de l'aérodyne;

$h^o A$ est une signal de vitesse verticale pouvant provenir d'une centrale anémométrique;

$\tau_1$ est une constante de temps;

$\tau_2$ est une constante de temps;

s est l'opérateur de Laplace;

$j_z$ est la composante de l'accélération sur l'axe verticale pouvant provenir d'une centrale inertielle.

Par ailleurs, le signal représentatif de la vitesse verticale potentielle $h^o_T$ de l'aérodyne est obtenu en réalisant, au moyen d'un organe de calcul, une équation de la forme:

$$h^o_T = h^{*o} + \frac{1}{g} V_x \cdot \frac{dV_x}{dt},$$

formule dans laquelle

$h^{*o}$ est la vitesse verticale instantanée de l'aérodyne;

g est l'accélération de la pesanteur;

$V_x$ est la vitesse sol fournie par une centrale inertielle.

En raison de la nature des paramètres qu'il utilise, et en particulier de la vitesse sol $V_x$ et de la composante $j_z$ de l'accélération, le variomètre, selon la demande de brevet FR 2 390 735, s'applique essentiellement aux aérodynes équipés d'une centrale inertielle.

L'invention a donc plus particulièrement pour but un variomètre dont le principe général est similaire à celui de la demande de brevet FR 2 390 735, mais pouvant utiliser les paramètres disponibles sur les aérodynes ne comprenant pas de centrales inertielles.

Pour parvenir à ce résultat, il a été proposé d'obtenir la valeur de la vitesse verticale instantanée, en adjoignant à la vitesse verticale filtrée, une avance de phase qui est fonction de l'accélération suivant l'axe vertical aérodyne $j_{z1}$, calculée à partir de l'accélération verticale mesurée selon des axes liés à l'aérodyne et de l'angle de roulis $\phi$ de l'aérodyne.

2

Tel que défini dans la revendication 1, le variomètre selon l'invention comprend donc un cadran comportant, de façon classique, une graduation représentative d'une vitesse verticale, une aiguille indiquant, sur ladite graduation, la vitesse verticale instantanée $h^{*o}$, un index représentatif de la vitesse verticale potentielle $h^o_T$, cet index étant mobile autour du cadran de manière à ce que sa position par rapport à l'aiguille fournisse instantanément une indication de l'accélération sur la trajectoire de l'aérodyne et éventuellement un affichage numérique de la pente de l'aérodyne, la vitesse verticale instantanée $h^{*o}$ étant obtenue au moyen d'un circuit résolvant l'équation:

$$h^{*o} = \frac{h^o A}{1+\tau_1 s} \times \frac{1+(\tau_1+\tau_2)s}{1+\tau_2 s} + \frac{\tau_1}{1+\tau_1 s} \times \frac{\tau_2 s}{1+\tau_2 s} (j_{z1} - g \cos \phi)$$

formule dans laquelle:

$j_{z1}$ est la composante de l'accélération sur l'axe verticale de l'aérodyne,
$g$ est l'accélération de la pesanteur,
$\phi$ est l'angle de roulis de l'avion,
$s$ est l'opérateur de Laplace,
$\tau_1$ et $\tau_2$ sont des constantes de temps,
$h^o A$ est un signal de vitesse verticale pouvant provenir d'une centrale anémométrique;

ce variomètre est caractérisé en ce que le circuit permettant d'obtenir la vitesse verticale instantanée $h^{*o}$ comprend:

— une chaîne directe dont l'entrée reçoit un signal représentatif de l'expression $(j_{z1} - g \cos \phi)$, cette chaîne directe comprenant un premier additionneur, puis un intégrateur, à la sortie duquel est prélevé le signal $h^{*o}$;
— une boucle de contre-réaction comprenant un soustracteur recevant le signal $h^{*o}$ et un signal $h^o A$, et dont la sortie est reliée, d'une part, à une intégrateur de fonction de transfert

$$\frac{1}{\tau_1 \times \tau_2 s}$$

et à un amplificateur de gain

$$\frac{\tau_1 + \tau_2}{\tau_1 \times \tau_2},$$

ces deux éléments étant disposés en parallèle et reliés à leur sortie aux deux entrées d'un second additionneur lui-même relié au susdit premier additionneur.

L'invention concerne également un variomètre perfectionné tel que défini dans la revendication 2 où se trouve décrit un circuit permettant d'élaborer un signal de vitesse verticale potentielle $h^o_T$ à partir de la formule suivante:

$$h^o_T = h^{*o} + \frac{1}{g} V_H \frac{dV^*}{dt} \frac{1}{1+\tau_4 s}$$

dans laquelle:

I) $h^{*o}$ est la vitesse verticale instantanée de l'aérodyne (qui est obtenue comme précédemment indiqué);

II) $V_H$ est une vitesse hybride qui a pour expression:

$$V_H = \frac{TAS}{1+\tau'_1 s} \times \frac{1+(\tau'_1+\tau'_2)s}{1+\tau'_2 s} + \frac{\tau'_1}{1+\tau'_1 s} \times \frac{\tau'_2 s}{1+\tau'_2 s} (j_{x1} - g \sin \theta)$$

l'expression TAS désignant la vitesse propre de l'aérodyne (TRUE AIR SPEED);

$\tau'_1$ et $\tau'_2$ étant des constantes de temps,
$\theta$ étant l'assiette longitudinale de l'aérodyne,
$j_{x1}$ étant la composante de l'accélération sur l'axe longitudinal de l'aérodyne,
$s$ étant l'opérateur de Laplace.

III)

$$\frac{dV^*}{dt}$$

consiste en un mélange de la dérivée de la vitesse propre de l'aérodyne et de l'accélération longitudinale compensée de la pesanteur, l'expression

$$\frac{dV*}{dt}$$

étant de la forme:

$$\frac{dV*}{dt} = \frac{\tau_3 s}{1+\tau_3 s}(j_{x1}-g\sin\theta) + \frac{s}{1+\tau_3 s} TAS,$$

dans laquelle $\tau_3$ est une constante de temps.

La demande de brevet européen 79400290.7 décrit un variomètre perfectionné tel que defini dans le preambule de la revendication 1, et une variante dudit variomètre tel que defini dans le preambule de la revendication 2.

L'invention concerne, en outre, un variomètre perfectionné tel que défini dans la revendication 3, qui comprend un voyant lumineux servant à générer le signal d'avertissement d'un système de détection d'un gradient de vent.

Un tel variomètre permet ainsi d'obtenir, en cas d'un gradient de vent, un comportement valable quelle que soit la vitesse air de l'aérodyne, et ce, sans qu'il soit nécessaire d'effecteur d'autres corrections, comme cela était le cas dans le variomètre décrit dans la demande de brevete FR 2 390 735.

Un mode de réalisation de l'invention sera décrit ci-après, à titre d'exemple non limitatif, avec référence aux dessins annexés dans lesquels:

La figure 1 est un schéma-bloc due système de calcul de la vitesse verticale instantanée de l'aérodyne;

La figure 2 est un schéma-bloc du système de calcul de la vitesse potentielle $h°_T$ de l'aérodyne;

La figure 3 est un block-diagramme permettant d'illustrer le principe de la commande du variomètre perfectionné;

La figure 4 représente schématiquement la face avant d'un variomètre perfectionné.

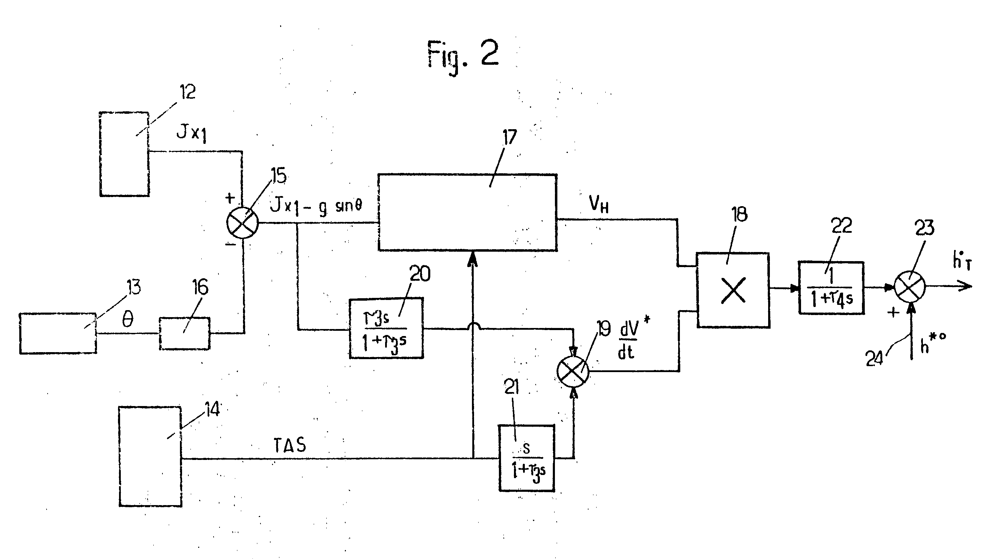

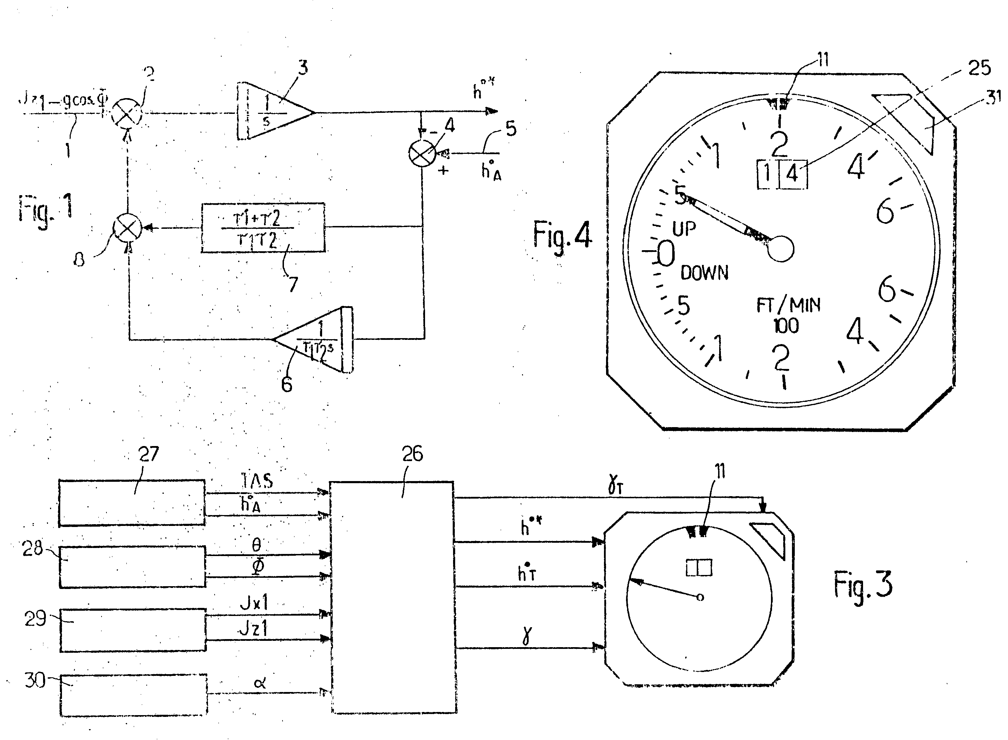

Avec référence à la figure 1, le circuit permettant d'obtenir le signal de vitesse verticale instantanée de l'aérodyne et qui commande la position de l'aiguille (figure 4) du variomètre, comprend essentiellement:

— une chaîne directe, dont l'entrée 1 reçoit un signal représentatif de l'expression $j_{z1}-g\cos\phi$, cette chaîne directe comprenant un additionneur 2, un intégrateur 3 (fonction de transfert

$$\frac{1}{s}),$$

à la sortie duquel est prélevé le signal $h*°$ de vitesse verticale instantanée;

— une boucle de contre-réaction comprenant un premier soustracteur 4 recevant le signal $h*°$ et un signal $h°A$ (entrée 5) de vitesse verticale provenant de la centrale anémométrique de l'aérodyne, et dont la sortie est reliée à un intégrateur 6 de fonction de transfert

$$\frac{1}{\tau_1 \times \tau_2 s}$$

et à un amplificateur 7 de gain

$$\frac{\tau_1+\tau_2}{\tau_1 \times \tau_2}$$

ces deux éléments étant disposés en parallèle et reliés, par leur sortie, aux deux entrées d'un additionneur 8, l'additionneur 8 étant lui-même relié à l'additionneur 2 en amont de l'intégrateur 3.

En ce qui concerne le signal représentatif de la vitesse verticale potentielle $h°_T$ de l'aérodyne, à partir duquel est généré l'index mobile 11 (figure 4) du variomètre, ce signal est élaboré au moyen du circuit représenté figure 2, à partir:

— d'un signal représentatif de la composante $j_{x1}$ de l'accélération, fourni par un boîtier accélérométrique 12;

4

**0 006 773**

— d'un signal représentatif de l'assiette longitudinale $\theta$, fourni par une centrale de verticale 13;

— d'un signal représentatif de la vitesse propre de l'aérodyne TAS, émanant d'une centrale anémométrique 14;

— et d'un signal représentatif de la vitesse verticale instantanée $h^{*o}$ de l'aérodyne, fourni par un circuit du type de celui représenté figure 1.

Le signal issu du boîtier accélérométrique 12 est transmis à un soustracteur 15, qui reçoit, sur son autre entrée, un signal $\theta$ fourni par un générateur de fonction sinus 16, qui reçoit le signal représentatif de l'assiette $\theta$ fourni par la centrale de verticale 13.

Le soustracteur 15 est, quant à lui, relié par sa sortie:

— d'une part, à une filtre complémentaire du second ordre 17, qui reçoit également un signal représentatif de la vitesse propre de l'aérodyne TAS émanant de la centrale anémométrique 14 et qui transmet un signal représentatif de la vitesse hybride $V_H$ telle que précédemment définie à un multiplieur 18, et

— d'autre part, à un additionneur 19 par l'intermédiaire d'un filtre 20 de fonction de transfert

$$\frac{\tau_3 s}{1+\tau_3 s}.$$

L'additionneur 19 reçoit, en outre, un signal représentatif de la dérivée par rapport au temps de la vitesse propre de l'avion, qui est fourni par un dérivateur 21 de fonction de transfert

$$\frac{s}{1+\tau_3 s},$$

relié à la sortie de la centrale anémométrique 14.

Il est à noter que, pour obtenir un fonctionnement correct, les constantes de temps $\tau_3$ du dérivateur 21 et du filtre 20 doivent être identiques.

Le signal

$$\frac{dV^*}{dt} = \frac{\tau_3 s}{1+\tau_3 s}(j_{x1}-g \sin \theta) + \frac{s}{1+\tau_3 s} TAS$$

fourni par l'additionneur 19 est transmis à la seconde entrée du multiplieur 18.

La sortie de ce multiplieur 18 est reliée, par l'intermédiaire d'un filtre 22 de fonction de transfert

$$\frac{1}{1+\tau_4 s},$$

à l'une des deux entrées d'un sommateur 23, qui reçoit par sa deuxième entrée 24, un signal représentatif de vitesse verticale instantanée, $h^{*o}$, provenant du circuit représenté sur la figure 1.

Le signal fourni par ce sommateur 23 est le signal de vitesse verticale potentielle $h^o_T$, qui permet de générer l'index 11 du variomètre (figure 4).

D'une façon générale, l'élaboration des signaux représentatifs de $h^{*o}$, $h^o_T$ et du paramètre affiché numériquement sur le variomètre, affichage numérique 25 (figure 4), tel que la pente $\gamma_1=\theta-\alpha$ ou la pente

$$\gamma_2=\frac{h^{*o}}{V_H},$$

qui est une pseudo-pente air/sol, peut être effectuée par un organe de calcul selon le bloc-diagramme représenté figure 3.

Cette organe de calcul peut comprendre une unité centrale 26, qui reçoit:

— d'une centrale anémométrique 27, les signaux représentatifs de la vitesse propre de l'aérodyne TAS et de la vitesse verticale de l'aérodyne $h^o A$;

— d'une centrale de verticale 28, des signaux représentatifs de l'assiette longitudinale $\theta$ et de l'angle de roulis $\phi$ de l'aérodyne;

— d'un bloc accélérométrique 29, les signaux $j_{x1}$ et $j_{z1}$ qui sont des composantes de l'accélération liées à l'aérodyne;

— d'un détecteur d'incidence 30, un signal représentatif de l'incidence $\alpha$ de l'aérodyne.

5

Il est à noter que, à partir de ces différents paramètres, l'unité centrale peut fournir une information sur la pente total

$$\gamma_T = \frac{j_{x1} - j_{z1\alpha}}{g}$$

et sur la pente aérodynamique $\gamma a = \theta - \alpha$, informations pouvant être utilisées par de nombreux instruments à bord de l'aérodyne, tels que des systèmes de pilotage automatique, des horizons directeurs de vol.

Cette unité centrale peut également être conçue pour effecteur la détection rapide d'un gradient de vent, par exemple en surveillant les variations d'une grandeur

$$A = (\gamma_T - \gamma_A)g - \frac{s\,(TAS)}{1 + 0,2\,s}$$

et délivrant un signal d'avertissement lorsque cette grandeur, éventuellement combinée à l'incidence $\alpha$ de l'aérodyne au moment où se produit le gradient de vent, s'élève au-dessus de seuil prédéterminé.

Dans le cas où l'aérodyne dispose d'un tel système de détection de gradient de vent, l'invention propose d'utiliser comme signal d'avertissement, un voyant lumineux 31, disposé sur le cadran du variomètre ou à proximité immédiate de celui-ci, de manière à ce que, dès qu'il se produit un gradient de vent, l'attention du pilote soit attirée sur le variomètre, qui indique, notamment grâce à l'écart entre l'aiguille et l'index 11, la nature des manoeuvres qu'il doit effectuer.

**Revendications**

1. Variomètre perfectionné, notamment pour aérodyne, ce variomètre comprenant un cadran comportant une graduation représentative d'une vitesse verticale, une aiguille indiquant, sur ladite graduation, la vitesse verticale instantanée $h^{*o}$, un index (11) représentatif de la vitesse verticale potentielle $h^o_T$, cet index (11) étant mobile autour du cadran de manière à ce que sa position, par rapport à l'aiguille, fournisse instantanément une indication de l'accélération sur la trajectoire de l'aérodyne, et éventuellement, un affichage numérique (25) de la pente de l'aérodyne, la vitesse verticale instantanée $h^{*o}$ étant obtenue au moyen d'un circuit résolvant l'équation:

$$h^{*o} = \frac{h^o A}{1 + \tau_1 s} \times \frac{1 + (\tau_1 + \tau_2)s}{1 + \tau_1 s} + \frac{\tau_1}{1 + \tau_1 s} \times \frac{\tau_2 s}{1 + \tau_2 s}(j_{z1} - g\cos\phi)$$

formule dans laquelle:
$j_{z1}$ est la composante de l'accélération sur l'axe vertical de l'aérodyne,
$g$ est l'accélération de la pesanteur,
$\phi$ est l'angle de roulis de l'avion,
$s$ est l'opérateur de Laplace,
$\tau_1$ et $\tau_2$ sont des constantes de temps,
$h^o A$ est un signal de vitesse verticale pouvant provenir d'une centrale anémométrique;
variomètre caractérisé en ce que le circuit permettant d'obtenir la vitesse verticale instantanée $h^{*o}$ comprend:

— une chaîne directe dont l'entrée (1) reçoit un signal représentatif de l'expression $(j_{z1} - g\cos\phi)$, cette chaîne directe comprenant un premier additionneur (2), puis un intégrateur (3), à la sortie duquel est prélevé le signal $h^{*o}$;
— une boucle de contre-réaction comprenant un soustracteur (4) recevant le signal $h^{*o}$ et un signal $h^o A$, et dont la sortie est reliée, d'une part, à un intégrateur (6) de fonction de transfert

$$\frac{1}{\tau_1 \times \tau_2 s}$$

et à un amplificateur (7) de gain

$$\frac{\tau_1 + \tau_2}{\tau_1 \times \tau_2},$$

ces deux éléments étant disposés en parallèle et reliés à leur sortie aux deux entrées d'un second additionneur (8) lui-même relié au susdit premier additionneur (2).

2. Variomètre perfectionné, notamment pour aérodyne, comprenant un cadran comportant une graduation représentative d'une vitesse verticale, une aiguille indiquant, sur ladite graduation, la vitesse verticale instantanée $h^{*o}$, un index (11) représentatif de la vitesse verticale potentielle $h^o_T$, cet index (11) étant mobile autour du cadran de manière à ce que sa position, par rapport à l'aiguille, fournisse instantanément une indication de l'accélération sur la trajectoire de l'aérodyne, et éventuellement un affichage numérique (25) de la pente de l'aérodyne, la vitesse verticale potentielle $h^o_T$ de l'aérodyne étant fournie à partir de la formule suivante:

$$h^o_T = h^{*o} + \frac{1}{g} \; V_H \; \frac{dV^*}{dt} \; \frac{1}{1+\tau_4 s}$$

dans laquelle:

I) $h^{*o}$ est la vitesse verticale instantanée de l'aérodyne

II) $V_H$ est une vitesse hybride qui a pour expression:

$$V_H = \frac{TAS}{1+\tau'_1 s} \times \frac{1+(\tau'_1+\tau'_2)s}{1+\tau'_2 s} + \frac{\tau'_1}{1+\tau'_1 s} \times \frac{\tau'_2 s}{1+\tau'_2 s}(j_{x1}-g \sin\theta),$$

l'expression TAS désignant la vitesse propre de l'aérodyne,

$\tau'_1$ et $\tau'_2$ étant des constantes de temps,

$\theta$ étant l'assiette longitudinale de l'aérodyne,

$j_{x1}$ étant la composante de l'accélération sur l'axe longitudinal de l'aérodyne,

s étant l'opérateur de Laplace.

III)

$$\frac{dV^*}{dt}$$

consiste en un mélange de la dérivée de la vitesse propre de l'aérodyne et de l'accélération longitudinale compensée de la pesanteur, l'expression

$$\frac{dV^*}{dt}$$

étant de la forme:

$$\frac{dV^*}{dt} = \frac{\tau_3 s}{1+\tau_3 s}(j_{x1}-g \sin\theta) + \frac{s}{1+\tau_3 s} TAS,$$

dans laquelle $\tau_3$ est une constante de temps, variomètre caractérisé en ce que le signal représentatif de la vitesse verticale potentielle $h^o_T$ est élaboré au moyen, d'un circuit dans lequel le signal $j_{x1}$ issu d'un boîtier accélérométrique (12) est transmis à un soustracteur (15) qui reçoit, sur son autre entrée, un signal sinus $\theta$, la sortie dudit soustracteur (15) étant reliée, d'une part, à un filtre complémentaire du second ordre (17), qui reçoit également un signal représentatif de la vitesse propre (TAS) de l'aérodyne, émanant d'une centrale anémométrique (14), la sortie de ce filtre complémentaire (17) étant reliée à un multiplieur (18), ledit soustracteur (15) étant relié d'autre part, par l'intermédiaire d'un filtre (20) à un premier additionneur (19) qui reçoit, en outre, un signal représentatif de la dérivée par rapport au temps de la vitesse propre (TAS) de l'aérodyne, la sortie de ce premier additionneur (19) étant reliée à la seconde entrée du multiplieur (18), lequel est relié, par sa sortie, par l'intermédiaire d'un filtre (22), à l'une des deux entrées d'un second sommateur (23) qui reçoit, par sa deuxième entrée (24), un signal représentatif de la vitesse verticale instantanée $h^{*o}$, et qui fournit, par sa sortie, le signal de vitesse verticale potentielle $h^o_T$.

3. Variomètre selon l'une des revendications 1 et 2, caractérisé en ce qu'il comprend un voyant lumineux (31) servant à générer le signal d'avertissement d'un système de détection d'un gradient de vent.

**Patentansprüche**

1. Verbesserter Steig- und Sinkgeschwindigkeitsmesser, insbesondere für Drehflügelflugzeuge,

7

**0 006 773**

wobei dieser Steig- und Sinkgeschwindigkeitsmesser ein Zeigerinstrument umfaßt, welches eine eine vertikale Geschwindigkeit darstellende Skala, eine auf dieser Skala die vertikale Momentangeschwindigkeit $h^{*\circ}$ anzeigende Nadel, eine die potentielle vertikale Geschwindigkeit $h^{\circ}_T$ anzeigende Marke (11), die um das Zeigerinstrument so bewegbar ist, daß seine Lage in bezug auf die Nadel eine augenblickliche Anzeige der Beschleunigung auf der Bahn des Drehflügelflugzeuges liefert, und gegebenenfalls eine Digitalanzeige (25) der Neigung des Drehflügelflugzeuges umfaßt, wobei die vertikale Momentangeschwindigkeit $h^{*\circ}$ mittels eines Schaltkreises erhalten wird, der die folgende Gleichung löst:

$$h^{*\circ} = \frac{h^{\circ}A}{1+\tau_1 s} \times \frac{1+(\tau_1+\tau_2)s}{1+\tau_1 s} + \frac{\tau_1}{1+\tau_1 s} \times \frac{\tau_2 s}{1+\tau_2 s}(j_{z1} - g \cos \phi)$$

wobei in dieser Formel:
$j_{z1}$ die Komponente der Beschleunigung des Drehflügelflugzeuges auf der senkrechten Achse,
g die Erdbeschleunigung,
$\phi$ der Neigungswinkel des Flugzeugs,
s der Laplace-Operator,
$\tau_1$ und $\tau_2$ Zeitkonstanten, und
$h^{\circ}A$ ein Vertikalgeschwindigkeitssignal ist, das aus einer Windmesserzentrale herrühren kann;
wobei der Steig- und Sinkgeschwindigkeitsmesser dadurch gekennzeichnet ist, daß der Schaltkreis zum Erhalten der vertikalen Momentangeschwindigkeit $h^{*\circ}$ umfaßt:

— einen direkten Schaltungszweig, dessen Eingang (1) ein Signal umpfängt, das den Ausdruck $(j_{z1} - g \cos \phi)$ darstellt, wobei dieser direkte Schaltungszweig einen ersten Addierer (2) und danach einen Integrator (3) umfaßt, an dessen Ausgang das Signal $h^{*\circ}$ abgenommen wird;
— eine Gegenkopplungsschleife, die einen Subtrahierer (4) umfaßt, welcher das Signal $h^{*\circ}$ und ein Signal $h^{\circ}A$ empfängt und dessen Ausgang zum einen mit einem Integrator (6) der Übertragungsfunction

$$\frac{1}{\tau_1 \times \tau_2 s}$$

und zum anderen mit einem Verstärker (7) der Verstärkung

$$\frac{\tau_1 + \tau_2}{\tau_1 \times \tau_2}$$

verbunden ist, wobei diese beiden Elemente parallel angeordnet und an ihrem Eingang mit den beiden Eingängen eines zweiten Addierers (8) verbunden sind, der seinerseits mit dem ersten Addierer (2) verbunden ist.

2. Verbesserter Steig- und Sinkgeschwindigkeitsmesser, insbesondere für Drehflügelflugzeuge, mit einem Zeigerinstrument, das eine eine Vertikalgeschwindigkeit darstellende Skala, eine auf dieser Skala die vertikale Momentangeschwindigkeit $h^{*\circ}$ anzeigende Nadel, eine die potentielle Vertikalgeschwindigkeit $h^{\circ}_T$ darstellende Marke (11), die um das Zeigerinstruments so bewegbar ist, daß seine Lage in bezug auf die Nadel augenblicklich eine Anzeige der Beschleunigung auf der Bahn des Drehflügelflugzeugs liefert, und gegebenenfalls eine Digitalanzeige (25) der Neigung des Flugzeugs umfaßt, wobei die potentielle Vertikalgeschwindigkeit $h^{\circ}_T$ des Drehflügelflugzeugs durch die folgende Formel gegeben ist;

$$h^{\circ}_T = h^{*\circ} + \frac{1}{g} V_H \frac{dV^*}{dt} \frac{1}{1+\tau_4 s}$$

worin:
I) $h^{*\circ}$ die vertikale Momentangeschwindigkeit des Drehflügelflugzeugs ist;
II) $V_H$ eine Hybridgeschwindigkeit ist, die folgendermaßen ausgedrückt wird:

$$V_H = \frac{TAS}{1+\tau'_1 s} \times \frac{1+(\tau'_1+\tau'_2)s}{1+\tau'_2 s} + \frac{\tau'_1}{1+\tau'_1 s} \times \frac{\tau'_2 s}{1+\tau'_2 s}(j_{x1} - g \sin \theta)$$

worin der Ausdruck TAS die Eigengeschwindigkeit des Drehflügelflugzeugs bezeichnet,

8

$\tau'_1$ und $\tau'_2$ Zeitkonstanten sind,
$\theta$ der Längsneigungswinkel des Drehflügels,
$j_{x1}$ die Beschleunigungskomponente des Drehflügelflugzeugs auf der Längsachse, und
s der Laplace-Operator ist;

III)

$$\frac{dV^*}{dt}$$

aus einer Mischung der Ableitung der Eigengeschwindigkeit des Drehflügelflugzeugs und der um die Schwerkraft kompensierten Längsbeschleunigung besteht, wobei der Ausdruck

$$\frac{dV^*}{dt}$$

folgende Form hat:

$$\frac{dV^*}{dt} = \frac{\tau_3 s}{1+\tau_3 s}(j_{x1}-g\sin\theta)+\frac{s}{1+\tau_3 s}\,\text{TAS}$$

worin $\tau_3$ eine Zeitkonstante ist; wobei der Steig- und Sinkgeschwindigkeitsmesser dadurch gekennzeichnet ist, daß das die potentielle Vertikalgeschwindigkeit $h°_T$ darstellende Signal durch einen Schaltkreis erzeugt wird, in dem das von einer Beschleunigungsmeßdose (12) abgegebene Signal $j_{x1}$ zu einem Subtrahierer (15) übertragen wird, der an seinem anderen Eingang ein Signal $\sin\theta$ empfängt, wobei der Ausgang dieses Subtrahierers (15) zum einen mit einem Komplementärfilter zweiter Ordnung (17) verbunden ist, welches ferner ein die Eigengeschwindigkeit (TAS) der Drehflügelflugzeugs darstellendes Signal aus einer Windmesserzentrale (14) empfängt, wobei der Ausgang dieses Komplementärfilters (17) mit einem Multiplizierer (18) verbunden ist, wobei der Subtrahierer (15) zum anderen über ein Filter (20) mit einem ersten Addierer (19) verbunden ist, der ferner ein Signal empfängt, das die Ableitung der Eigengeschwindigkeit (TAS) des Drehflügelflugzeugs nach der Zeit darstellt, wobei der Ausgang dieses ersten Addierers (19) mit dem zweiten Eingang des Multiplizierers (18) verbunden ist, welcher an seinem Ausgang über ein Filter (22) mit einem der beiden Eingänge eines zweiten Summierers (23) verbunden ist, der an seinem zweiten Eingang (24) ein Signal empfängt, das die vertikale Momentangeschwindigkeit $h^*°$ empfängt und an seinem Ausgang das Signal für die potentielle Vertikalgeschwindigkeit $h°_T$ liefert.

3. Steig- und Sinkgeschwindigkeitsmesser nach einem der Ansprüche 1 und 2, dadurch gekennzeichnet, daß er eine Leuchtanzeige (31) umfaßt, die dazu dient, das Warn-signal eines Windgefälle-Detektionssystems zu erzeugen.

## Claims

1. An improved variometer, more especially for aerodynes, this variometer comprising a dial having a graduation representative of a vertical speed, a needle indicating, on said graduation, the instantaneous vertical speed $h^*°$, an index (11) representative of the potential vertical speed $h°_T$, this index (11) being mobile around the dial so that its position, with respect to the needle, provides instantaneously an indication of the acceleration along the trajectory of the aerodyne and possibly a digital display (25) of the slope of the aerodyne, the instantaneous vertical speed $h^*°$ being obtained by means of a circuit resolving the equation:

$$h^*° = \frac{h°A}{1+\tau_1 s} \times \frac{1+(\tau_1+\tau_2)s}{1+\tau_1 s} + \frac{\tau_1}{1+\tau_1 s} \times \frac{\tau_2 s}{1+\tau_2 s}(j_{z1}-g\cos\phi)$$

in which formula:
$j_{z1}$ is the component of the acceleration along the vertical axis of the aerodyne,
g is the acceleration due to gravity,
$\phi$ is the roll angle of the aircraft,
s is Laplace's operator,
$\tau_1$ and $\tau_2$ are time constants,
$h°A$ is a vertical speed signal coming possibly from an anemometric unit;
which variometer is characterized in that the circuit for obtaining the instantaneous vertical speed $h^*°$ comprises:

— a direct chain whose input (1) receives a signal representative of the expression $(j_{z1}-g\cos\phi)$,

9

this direct chain comprising a first adder (2), then an integrator (3), at whose output is taken the signal $h^{*o}$;

— a feedback loop comprising a subtractor (4) receiving the signal $h^{*o}$ and a signal $h^o A$, and whose output is connected, on the one hand, to an integrator (6) of the transfer function

$$\frac{1}{\tau_1 \times \tau_2 s}$$

and to an amplifier (7) with gain

$$\frac{\tau_1 + \tau_2}{\tau_1 \times \tau_2}$$

these two elements being disposed in parallel and connected at their output to the two inputs of a second adder (8) itself connected to said first adder (2).

2. An improved variometer, more especially for an aerodyne, comprising a dial having a graduation representative of a vertical speed, a needle indicating, on said graduation, the instantaneous vertical speed $h^{*o}$, and index (11) representative of the potential vertical speed $h^o_T$, this index (11) being mobile about the dial so that its position, with respect to the needle, supplies instantaneously an indication of the acceleration along the trajectory of the aerodyne, and possibly a digital display (25) of the slope of the aerodyne, the potential vertical speed $h^o_T$ of the aerodyne being supplied from the following formula:

$$h^o_T = h^{*o} + \frac{1}{g} \, V_H \, \frac{dV^*}{dt} \, \frac{1}{1+\tau_4 s}$$

in which:

I) $h^{*o}$ is the instantaneous vertical speed of the aerodyne,

II) $V_H$ is a hybrid speed which has for expression:

$$V_H = \frac{TAS}{1+\tau'_1 s} \times \frac{1+(\tau'_1+\tau'_2)s}{1+\tau'_2 s} + \frac{\tau'_1}{1+\tau'_1 s} \times \frac{\tau'_2 s}{1+\tau'_1 s}(j_{x1}-g \sin \theta)$$

the expression TAS designating the proper speed of the aerodyne,

$\tau'_1$ and $\tau'_2$ being time constants,

$\theta$ being the longitudinal trim of the aerodyne,

$j_{x1}$ being the component of acceleration along the longitudinal axis of the aerodyne,

s being Laplace's operator.

III)

$$\frac{dV^*}{dt}$$

consists of a mixture of the derivative of the proper speed of the aerodyne and the longitudinal acceleration compensated for gravity, the expression

$$\frac{dV^*}{dt}$$

being of the form:

$$\frac{dV^*}{dt} = \frac{\tau_3 s}{1+\tau_3 s}(j_{x1}-g \cos \theta) + \frac{s}{1+\tau_3 s} TAS$$

in which $\tau_3$ is a time constant, which variometer is characterized in that the signal representative of the potential vertical speed $h^o_T$ is provided by means of a circuit in which the signal $j_{x1}$ from an accelerometric unit (12) is fed to a subtractor (15) which receives, at its other input, a sine signal $\theta$, the output of said subtractor (15) being connected, on the one hand, to a complementary second order

10

filter (17), which also receives a signal representative of the proper speed (TAS) of the aerodyne, coming from an anemometric unit (14), the output of this complementary filter (17) being connected to a multiplier (18), said subtractor (15) being connected, on the other hand, through a filter (20) to a first adder (19) which receives, in addition, a signal representative of the derivative with respect to time of the proper speed (TAS) of the aerodyne, the output of this first adder (19) being connected to the second input of the multiplier (18), which is connected, by its output, through a filter (22) to one of the two inputs of a second summer (23) which receives, at its second input (24), a signal representative of the instantaneous vertical speed $h^{*o}$ and which supplies at its output the potential vertical speed signal $h^{o}{}_{T}$.

3. The variometer according to one of claims 1 and 2, further comprising a light indicator (31) serving to generate the warning signal of a wind gradient detectorsystem.

Fig. 2

Fig. 1

Fig. 4

Fig. 3

0 006 773